(19) Europäisches Patentamt / European Patent Office / Office européen des brevets

(11) **EP 1 532 760 B1**

(12) **EUROPEAN PATENT SPECIFICATION**

(45) Date of publication and mention
of the grant of the patent:
**11.03.2009 Bulletin 2009/11**

(21) Application number: **03763627.1**

(22) Date of filing: **19.05.2003**

(51) Int Cl.:
*H04L 1/00* (2006.01)     *H04L 1/18* (2006.01)

(86) International application number:
**PCT/EP2003/005264**

(87) International publication number:
**WO 2004/008678 (22.01.2004 Gazette 2004/04)**

(54) **A METHOD AND APPARATUS FOR TRANSMISSION SCHEME SELECTION BASED ON THE CHANNEL CONDITIONS AND THE LENGTH OF THE MESSAGE**

VERFAHREN UND VORRICHTUNG ZUR AUSWAHL DES ÜBERTRAGUNGSVERFAHRENS AUF DER BASIS DER KANALBEDINGUNGEN UND DER LÄNGE DER NACHRICHT

PROCEDE ET APPAREIL POUR LA SELECTION DE SCHEMAS DE TRANSMISSION BASEE SUR DES CONDITIONS DE CANAUX ET LA LONGUEUR DU MESSAGE

(84) Designated Contracting States:
**AT BE BG CH CY CZ DE DK EE ES FI FR GR HU IE IT LI LU MC NL PT RO SE SI SK TR**

(30) Priority: **13.07.2002 GB 0216358**

(43) Date of publication of application:
**25.05.2005 Bulletin 2005/21**

(73) Proprietor: **MOTOROLA, INC.**
**Schaumburg, IL 60196 (US)**

(72) Inventors:
• **MOLKDAR, Davood**
  **Eastleigh, Hampshire SO53 1FN (GB)**

• **FEATHERSTONE, Walter**
  **Swindon, Wiltshire SN3 1PT (GB)**

(74) Representative: **Jepsen, René Pihl et al**
**Eltima Consulting**
**Grove House, Lutyens Close'**
**Chineham Court**
**Basingstoke, Hants RG24 8AG (GB)**

(56) References cited:
EP-A- 0 903 883        US-A1- 2002 036 992
US-B1- 6 341 145

**Description**

Field of the invention

The invention relates to a method and apparatus for transmission scheme selection in a communication system, and in particular for a cellular packet communication system.

Background of the Invention

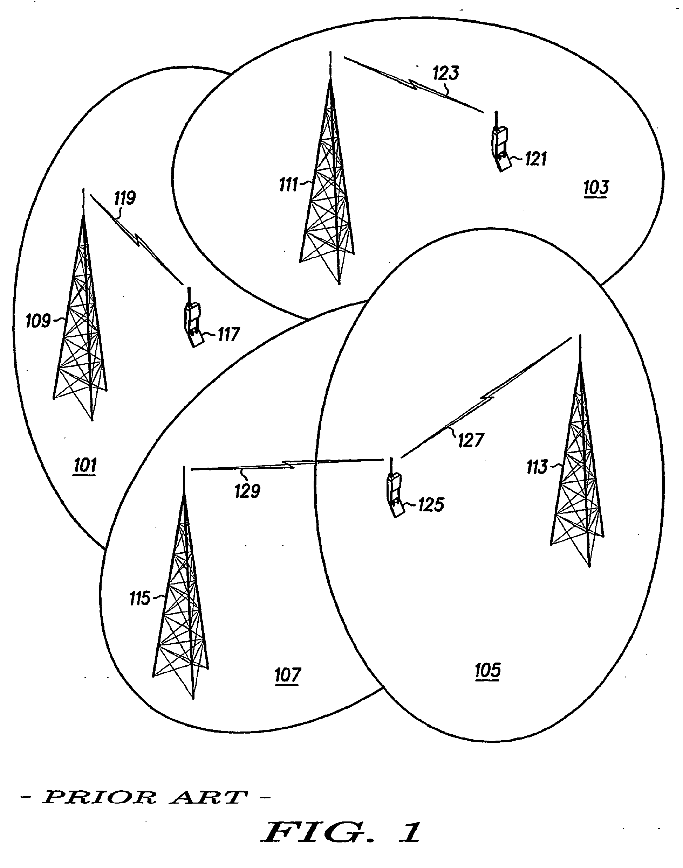

FIG. 1 illustrates the principle of a conventional cellular communication system 100 in accordance with prior art. A geographical region is divided into a number of cells 101, 103, 105, 107 each of which is served by base station 109, 111, 113, 115. The base stations are interconnected by a fixed network which can communicate data between the base stations 101, 103, 105, 107. A mobile station is served via a radio communication link by the base station of the cell within which the mobile station is situated. In the example if FIG. 1, mobile station 117 is served by base station 109 over radio link 119, mobile station 121 is served by base station 111 over radio link 123 and so on.

As a mobile station moves, it may move from the coverage of one base station to the coverage of another, i.e. from one cell to another. For example mobile station 125 is initially served by base station 113 over radio link 127. As it moves towards base station 115 it enters a region of overlapping coverage of the two base stations 111 and 113 and within this overlap region it changes to be supported by base station 115 over radio link 129. As the mobile station 125 moves further into cell 107, it continues to be supported by base station 115. This is known as a handover or handoff of a mobile station between cells.

A typical cellular communication system extends coverage over typically an entire country and comprises hundred or even thousands of cells supporting thousands or even millions of mobile stations. Communication from a mobile station to a base station is known as uplink, and communication from a base station to a mobile station is known as downlink.

The fixed network interconnecting the base stations is operable to route data between any two base stations, thereby enabling a mobile station in a cell to communicate with a mobile station in any other cell. In addition the fixed network comprises gateway functions for interconnecting to external networks such as the Public Switched Telephone Network (PSTN), thereby allowing mobile stations to communicate with landline telephones and other communication terminals connected by a landline. Furthermore, the fixed network comprises much of the functionality required for managing a conventional cellular communication network including functionality for routing data, admission control, resource allocation, subscriber billing, mobile station authentication etc.

Currently the most ubiquitous cellular communication system is the 2nd Generation system known as the Global System for Mobile communication (GSM). Similarly to analogue systems, the frequency band is divided into relatively narrow channels of 200 kHz and each base station is allocated one or more of these frequency channels. However, in contrast to the analogue systems, each frequency channel is divided into eight separate time slots allowing up to eight mobile stations to use each frequency channel. This method of sharing the available resource is known as Time Division Multiple Access (TDMA). Further description of the GSM TDMA communication system can be found in 'The GSM System for Mobile Communications' by Michel Mouly and Marie Bernadette Pautet, Bay Foreign Language Books, 1992, ISBN 2950719007.

The GSM communication system uses connection based services wherein a permanent connection between the two parties of a call is setup. A connection based service is well suited for applications where data is communicated continuously. However, as the connection is permanent for the duration of the call, it will be maintained even when the parties of a call are not transmitting data. A connection based protocol is thus highly inefficient for data of a bursty nature. One example of such is internet connections where data is only required during download of a new page. Hence for most of the time the connection formed will be idle for a mobile station accessing the internet.

A more efficient protocol for communicating bursty data is a packet data protocol where one block or packet of data is transmitted at the time. Each packet is routed to the destination independently of other packets. Thus different packets are routed as and when they occur and may be routed along different routes. Also the connection over the air interface is not continually maintained between the mobile station and the base station, but rather is typically set up for each new packet. The GSM communication system has been enhanced with an optional packet data protocol known as General Packet Radio Service (GPRS). Further information on GPRS can be found in "General Packet Radio Service in GSM, Jian Cai and David J. Goodman, IEEE Communication Magazine, Oct 1997, pp. 122-131".

The Universal Mobile Telecommunication System (UMTS) is another example of cellular communication system supporting packet based communication. Further details in can be found in 'WCDMA for UMTS', Harry Holma (editor), Antti Toskala (Editor), Wiley & Sons, 2001, ISBN 0471486876.

An example of a packet communication system is provided in United States of America Patent US 2002/0036992 which discloses packet communication wherein a packet delay is dependent upon the number of blocks that contain either a draining delay or a tail delay, wherein the delays are determined solely by the number of blocks in a packet

One protocol known for reducing the error rate in a packet based communication systems is the Automatic Repeat reQuest (ARQ) scheme. In accordance with this scheme, packets transmitted from the packet source and received without errors (following any forward error correcting coding and decoding that may be employed) are acknowledged by the destination. Thus the packet destination transmits and ACKnowledge (ACK) message to the source to indicate that a packet has been received without errors. Typically, an ACK message provides acknowledgement for a group of packets. If the destination receives one or more packets with errors, or according to an algorithm determines that it has not received a packet, it transmits a Negative ACKnowledge (NACK) message back to the source. Typically, the NACK message comprises information enabling the source to determine which transmitted packet was the last received without errors, and upon receiving the NACK message, the source continues to re-transmit packets starting with the first packet not acknowledged. The resultant packet error rate is thus significantly improved as any packets received with errors are retransmitted until they are received without errors. The ACK/NACK messages and extra retransmission use additional communication resource but in a typical cellular communication system, this additional resource consumption is significantly less than the additional resource required for error correcting coding or increased signal to noise ratio to achieve the same overall data rate.

Setting the error rate of each packet too low compared to the desired overall error rate will result in excessive resource use in order to communicate the packet, but will result in low delay and minimal resource use in retransmissions. However, setting the error rate of each packet too high will result in low resource use for communicating the packet but excessive resource use and delay caused by NACK messages and retransmissions. Therefore, depending on the Quality of Service (QoS) required, specifically in terms of acceptable delay and overall error rate, there is an optimal choice of packet error rate that will meet the requirements with the minimum of resource use. However, the transmission scheme settings required to achieve this depend on the radio propagation conditions and can vary significantly. Hence, for high interference a high signal to noise ratio and/or coding scheme is required resulting in a high resource use. For low interference, the same performances can be achieved with a less resource demanding scheme.

It is thus very important to choose a transmission scheme which can meet the requirements for the current radio conditions. Consequently, communication systems such as GPRS and UMTS have defined a plurality of transmissions schemes to meet different QoS requirements in different radio conditions. A suitable transmission scheme is chosen based on the QoS requirements of the service required and the measurements of the current propagation conditions for the given mobile station. However, this transmission scheme selection is somewhat limited by only considering these specific parameters. Thus selection based only on the QoS parameters of overall desired data rate and maximum acceptable delay fails to consider other parameters that may improve the service provided to the user and/or the reduce the resource required to provide this service.

Thus an improved method of transmission scheme selection would be advantageous.

**Summary of the Invention**

The inventors of the current invention have realised that conventional transmission scheme selection has disadvantages in only considering a limited number of QoS parameters, and that improvements can be made if the parameter of message information size is used in transmission scheme selection. Hence, the invention seeks to provide an improved system for transmission scheme selection.

Accordingly there is provided a method of transmission scheme selection in accordance with claim 1,

The invention thereby provides the advantage of optimising the transmission scheme selection for different message information size. It thus allows for the trade off between resource consumption and delay for initial transmissions versus resource consumption and delay for retransmissions to be optimised for the specific message information size.

According to a first feature of the invention, the plurality of transmission schemes comprises transmission schemes employing different error correcting codes. This provides for a simple and efficient method of generating transmission schemes with different throughput and error performance, and thereby facilitates optimisation of the transmission scheme selection in response to the message information size.

According to a second feature of the invention, the plurality of transmission schemes comprises transmission schemes employing different modulation formats and preferably the different modulation formats are of different order. Again, this provides for a simple and efficient method of generating transmission schemes with different throughput and error performance and thereby facilitates optimisation of the transmission scheme selection in response to the message information size.

The error threshold may decrease for decreasing message information size. Hence, for small message information size a transmission scheme with improved error performance is chosen, thereby decreasing the probability of retransmissions and the therewith associated resource consumption and delay. For larger message information size more retransmissions are allowed, as this increases throughput for data packets not retransmitted. Typically, the delay caused by retransmissions is less critical for messages with large message information size as the delay is a much smaller proportion of the total transmission time.

The selection of the first transmission scheme may also be dependent upon an ARQ feedback delay and a probability of a Negative ACKnowledgement (NACK) for the determined characteristic.

The first transmission scheme may be selected as that estimated to have an average overall delay being the lowest. Hence, the average delay can be optimised depending on the message information size. Preferably the first transmission scheme is selected as that estimated to have the average overall delay being the lowest, while keeping an expected resource associated with transmission of the message below a resource threshold. Thus the delay optimisation is subject to a maximum resource consumption.

According to another feature of the invention, the transmission scheme is selected as that estimated to have a expected resource associated with transmission of the message being the lowest as well as having an error rate of the communication that is below an error threshold for the determined characteristic. Preferably the first transmission scheme is selected as that estimated to have the expected resource being the lowest, while keeping an average overall delay below a delay threshold. Thus the transmission scheme selection optimises the resource consumption in response to the message information size while maintaining an average delay below a given value.

The method may comprise the step of determining an availability of a communication resource. The method may comprise the selection of the first transmission scheme to additionally be in response to the determined system capacity. Preferably, the available communication resource is a resource providing ARQ feedback. Thus the transmissions scheme selection preferably optimises the total resource consumption, and specifically the total resource consumption of an ARQ feedback resource.

According to a second aspect of the invention, there is provided an apparatus for transmission scheme selection in accordance with claim 12.

## Brief Description of the Drawings

An embodiment of the invention will be described, by way of example only, with reference to the drawings, in which

FIG. 1 is an illustration of a cellular communication system in accordance with the prior art;

FIG. 2 is an illustration of a communication system comprising an apparatus for transmission scheme selection in accordance with a preferred embodiment of the invention; and

FIG. 3 illustrates a flow chart of a method of transmission scheme selection in accordance with an embodiment of the invention.

Detailed Description of a Preferred Embodiment of the Invention

In the following, a preferred embodiment of the invention will be described for a cellular wireless communication system, such as GPRS, EDGE (Enhanced Data rate for Global Evolution) or UMTS, but it will be apparent that the invention is not limited to this application and can be used in any suitable communication system.

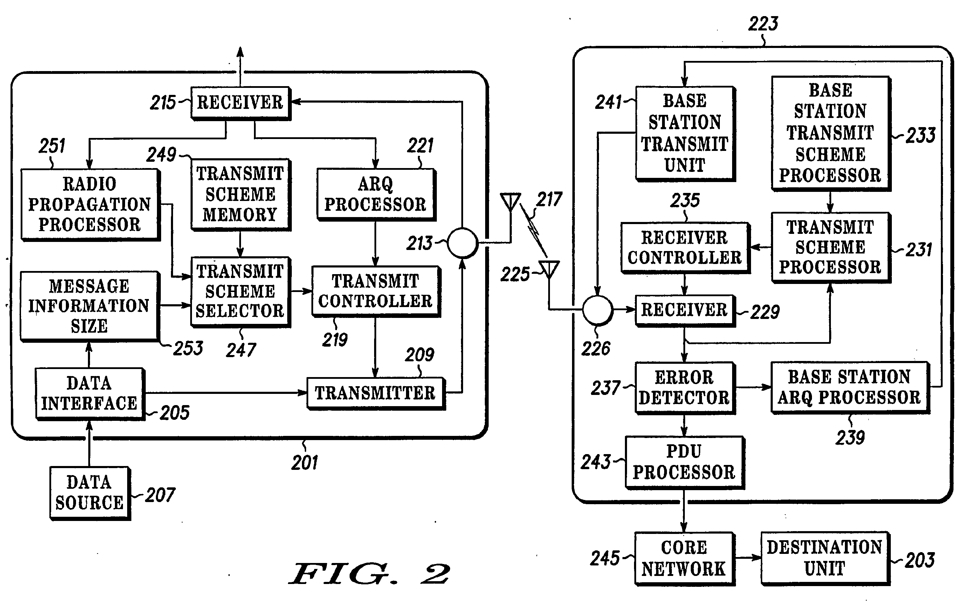

FIG. 2 is an illustration of a communication system comprising an apparatus for transmission scheme selection in accordance with a preferred embodiment of the invention. For brevity and clarity, FIG. 2 only shows elements of the communication system required for communication of data from a user equipment 201 to a destination unit 203. The destination unit may 203 be another user equipment, an entity of the fixed network, a communication device of an external network or any other destination that can be reached in or from a cellular communication system. It will be apparent, that the invention is equally applicable to communication between any two suitable communication devices and thus specifically that the data communication in other embodiments may be in the other direction, i.e. to a user equipment. Thus, FIG. 2 is an illustration of a specific scenario, and the functionality described can be implemented in any suitable way and localised, separated and distributed in any suitable form.

The user equipment 201 comprises a data interface 205 which receives the data to be transmitted from a data source 207 (which may be internal to the user equipment 201). The data interface is connected to a transmitter unit 209 which is connected to an antenna 211 through a duplexer 213. The duplexer 213 is further connected to a receiver unit 215 and is operable to isolate a received signal from the transmitted signal such that the same antenna 211 can be used both for transmission and reception. The user equipment 201 communicates by transmitting packet data and thus the transmitter unit 209 is operable to transmit data packets. The division and arrangement of data into suitable packets can be performed in the transmitter unit 209, the data interface 205, the data source 207 or can be distributed between these.

Specifically, for the preferred embodiment of a GPRS communication system, the incoming data is in the data interface split into discreet packet data units PDUs. The size of the PDU, i.e. the number of octets comprised in a given PDU may vary. Each PDU comprises the user data to be communicated and further comprises a header with relevant control and routing information. This information is amongst other things used to identify and control the routing of the data.

In the preferred embodiment, each PDU is separately fed to the transmitter unit 209. The transmitter unit 209 implements the lower network layer functions in accordance with the GPRS specification and specifically implements the Radio Link Control Layer (RLC) and the Physical Layer. Specifically, the RLC layer is responsible for dividing the PDU into a number of RLC blocks of data. The data of the PDU is initially interleaved and a suitable forward error correcting scheme is applied. The coded and interleaved data is then divided into the required number of RLC blocks. Each RLC block comprises a fixed number of channel symbols, and the number of PDU octets that can fit in one RLC block depends on the error correction code and modulation format used.

GPRS prescribes a number of combinations of different forward error correcting schemes and modulation formats that can be chosen for separating the PDU into RLC blocks. Different schemes can fit a different number of PDU octets in an RLC block, and generally the lower error protection provided the higher the number of octets that can be implemented in each RLC block. For example, in GPRS the transmission scheme known as CS-1 can fit in 20 PDU octets in each RLC block, whereas a different transmission scheme, CS-4, can fit in 50 PDU octets. However, CS-1 provides much improved error performance over that of CS-4. As a specific example, if a PDU comprises 200 octets, it will require 4 RLC blocks to transmit the PDU using CS-4 but 10 RLC blocks to transmit the PDU using CS-1.

The transmitter unit 209 thus generates the RLC blocks from the received PDU, and transmits them over the air interface 217 as is well known in the art. The user equipment 201 further comprises a transmit controller 219 which controls the transmitter unit 209, and specifically controls the generation of the RLC blocks and which RLC blocks are transmitted when.

The transmit controller 219 implements an ARQ scheme whereby RLC blocks that are not correctly received are transmitted. For this reason, the receiver unit 215 is operable to receive ACKnowledge or Negative ACKnowledge messages indicating whether the RLC blocks have been correctly received. The receiver is coupled to an ARQ processor 221 which extracts and processes ACK/NACK messages from the received signal. If the ARQ processor determines that a NACK message has been received, or that an expected ACK message has not been received, it informs the transmit controller of the last acknowledged RLC block. The transmit controller 219 then controls the transmitter unit 209 to re-transmit the RLC blocks following the latest acknowledged block.

The transmitter unit 209 communicates over the air interface 217 to a base station 223. The base station 223 comprises an antenna 225 and a duplexer 225 for isolating the received and transmitted signal. The duplexer 225 is connected to a base station receiver 229, which is operable to receive the RLC blocks in accordance with the selected transmission scheme. In order to determine the selected transmission scheme, the base station 223 comprises a transmit scheme processor 231, which is connected to the base station receiver 229. In the preferred embodiment, information of the selected transmission scheme is embedded in the communication from the user equipment 201, and the transmit scheme processor 231 extracts this information and selects the appropriate receive parameters accordingly. Preferably, the information is simply an identification of a pre-defined transmission scheme comprised in a transmissions scheme independent header of an RLC block. The transmit scheme processor 231 extracts this identification and uses it for a table look up in a base station transmit scheme memory 233, which contains the parameters of all the pre-defined transmission schemes. In other embodiments, the used transmission scheme may be determined without relying on specific information transmitted from the user equipment 201. A specific example of blind transmission scheme detection is where all possible transmission schemes are used to receive the RLC block and the one resulting in the lowest error rate is selected.

The transmission scheme processor 231 is connected to a receive controller 235 which, based on the transmission scheme parameters provided by the transmission scheme processor 231, controls the base station receiver 229 to receive the RLC blocks. The base station receiver 229 is connected to an error detector 237 that determines which RLC blocks are received, and how many errors are received in each RLC block. The number of errors can for example be determined by re-encoding the decoded data and counting the number of differences compared to the received signal, as is well known in the art.

The error detector 237 is connected to a base station ARQ processor 239 which, on the basis of the output of the error detector 237, determines and generates the appropriate ACK or NACK messages. The base station ARQ processor 239 is connected to the base station transmitter unit 241 which transmits the ACK/NACK messages over the air interface 217.

Further, the base station receiver 229 is connected to a PDU processor 243, which regenerates the transmitted PDU from the received RLC blocks. The received PDU is then communicated to the destination 203 through the communication network 245 using conventional packet routing techniques.

As communication systems such as GPRS specifies a number of different transmission schemes for encoding and transmitting the RLC blocks, the user equipment 201 comprises a transmit scheme selector 247, which selects the transmission scheme to be used for the communication of the RLC blocks. Typically, the same transmission scheme is used for all RLC blocks, but it is within the contemplation of the invention that the transmission scheme may be changed as frequently or as infrequently as desired. The transmission scheme selector 247 is connected to a transmission scheme memory 249, which holds the parameters for each transmission scheme.

The user equipment 201 further comprises a radio propagation processor 251 which is connected to the receiver unit 215. The radio propagation processor determines one or more characteristics of the radio propagation conditions for the user equipment 201. Preferably, the radio propagation processor determines a number of characteristics of the radio propagation conditions related to the expected error performance for the communication from the user equipment 201 over the air interface. Thus the radio propagation processor determines characteristic(s) including the current fade condition, interference levels, required transmit power, received pilot signal levels, multipath delay spread etc. The radio characteristic(s) may be derived in any suitable way and any method of determining a radio characteristic of a radio propagation condition may be used without detracting from the invention. Specifically, the characteristic(s) may be determined and or derived from measurements made by the receiver unit of the radio environment, of characteristics of one or more received signals or from information communicated from the fixed communication system, including for example power control commands. In the preferred embodiment, a combination of these methods is used to derive a single characteristic related to an expected error performance of the communication from the user equipment 201.

The transmission scheme selector 247 selects the transmission scheme in response to the radio characteristic (s) from the radio propagation processor 251. Typically, a transmission scheme is chosen which for the determined radio characteristics have the highest number of PDU octets in an RLC block while having an expected error performance below a given value. If the error rate is too low, too many RLC blocks are required for transmitting the PDU, and this results in increased delay and resource use. If the error rate is set too high, re-transmissions will almost certainly be required which may also lead to excessive delay and resource use, but in this case incurred by the retransmissions. Typically, the waste of resource is the pre-dominant disadvantage of setting the error rate too low and the increased delay is the main disadvantage of setting the error rate too high, and therefore the preferred error rate depends on the quality of service required by the requested service and specifically on the acceptable delay. Consequently, the preferred error rate is typically determined by the service requested, and thus the transmission scheme is typically chosen on the basis of the determined radio conditions and the service requested.

However, the inventors have realised that selection of a transmission scheme based only on radio conditions and requested service has a number of disadvantages. Therefore in accordance with an embodiment of the invention, the user equipment 201 further comprises a message information size processor 253 which can determine the size of the information message which is to be transmitted. In the embodiment of FIG. 2, the message information size processor 253 is connected to the data interface 205 and the transmission scheme selector 247.

The message information size processor 253 determines the size of the message which is to be transmitted. For messages consisting in only one PDU, this comprises determining the size of the PDU, and in the more general case for larger messages, it comprises determining the number and size of PDUs. The size of the message may be determined by any suitable means and measured by any suitable parameter. In the preferred embodiment, the entire data message is transferred to the data interface in one operation. The data message is then stored and separated into PDUs in the data interface 205, and the PDUs are fed to the transmitter unit 209 as required. In this embodiment, the data interface 205 directly communicates the message information size to the message information size processor 253. In other embodiments, the data source 207 may directly generate the PDUs and only feed these to the user equipment when required for transmission. In this case, the first PDUs may comprise information of the total message information size, and the message information size processor 253 is operable to extract this information and to provide it to the transmit scheme selector 247.

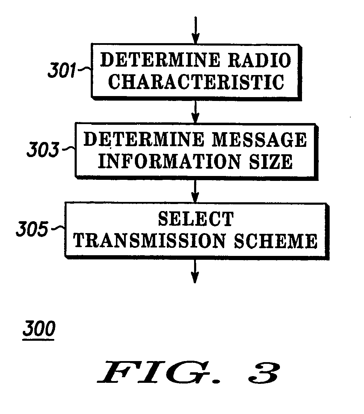

FIG. 3 illustrates a flow chart of a method 300 of transmission scheme selection in accordance with an embodiment of the invention. The figure will be described with reference to the communication system of FIG. 2.

In step 301 at least one radio characteristic of a radio propagation condition for a communication device is determined. In the preferred embodiment the radio characteristic is determined by the radio propagation processor 251 as previously described.

In step 303, a message information size of a message to be communicated from or to the communication device is determined. In the preferred embodiment, this message information size is determined by the message information size processor 253 as previously described. The message information size may relate to the size of any suitable message to be communicated. Specifically, a message is in the preferred embodiment a block of data to be communicated by the user equipment as one entity, although it may be communicated in a plurality of data packets. The message is thus a block of data to be transmitted with the same quality of service. Further, in the preferred embodiment the message is with respect to layer 1 to 3 of the radio protocol layered structure independent of other messages, although it may of course at e.g. the application layer level be dependent on other messages.

In step 305, a first transmission scheme is selected from the plurality of transmission schemes in response to the determined radio characteristic and the message information size. Thus the transmission scheme is not just selected dependent on radio characteristics or e.g. the quality of service but is also in response to the determined message size.

This provides a number of advantages. Mainly, it allows for the transmission scheme to be optimised not only for the quality of service and radio propagation environment but also for the message information size.

Each communication of a PDU and an RLC block is associated with an overhead in terms of header information and training data. This overhead is typically constant, and therefore as the message information decreases the resource loss due to this overhead becomes increasingly significant. Therefore for small message information size the overhead corresponds to a high proportion of the total communication, whereas it for a large message information size corresponds to a relatively smaller proportion. Hence, if retransmissions are required a significant amount of overhead will need to be re-transmitted for a small message information size. This is wasteful in terms of resource and therefore using a transmission scheme having an increased level of error correcting coding will increase the proportion of channel data compared to overhead and will reduce the probability of retransmissions.

Furthermore, communication of data is typically associated with a minimum data amount to be transmitted. For example, interleaving of one RLC block in GPRS extends over 4 frames regardless of the message information size. If the transmission scheme to be used is chosen based only on the required error rate and the propagation conditions, the capacity of a RLC blocks may be larger than the message information size. However, in accordance with the described embodiment, the message information size will be taken into account and a different transmission scheme will be chosen. This transmission scheme may have better error correcting coding and therefore less capacity for data in the RLC blocks. However, if there is enough capacity to fit in the message no additional RLC blocks are required and hence no additional resource is used to communicate these blocks. Since the error correcting coding is improved, the error rate will be much lower than the target rate and therefore the probability of retransmissions is significantly reduced. As retransmissions use additional resource and introduce a delay, the reduced error rate results in significantly improved performance.

Further, communication systems such as GPRS include methods for dynamically updating the choice of transmission scheme in response to the ACK/NACK messages received. If too many NACK messages are received, the system changes to a transmission scheme having better error performance. Hence, the initial transmission scheme selection acts only as the initial setting which is dynamically optimised to fit the current system. However, for small message information size, there is insufficient time for this optimisation process and therefore it is beneficial to use a less resource efficient but more reliable transmission scheme to ensure that the data is received without error. The method of transmission scheme selection provides for this to be possible.

Further, the total capacity of the communication system is determined by the total resource use by all services. However, messages with a small message information size will have very little impact on the total system capacity whereas messages with large message information size may have significant impact. Therefore, selecting transmission schemes with improved error performance will increase the reliability and reduce the delay for these services, but the impact on the total system capacity of using this scheme will be insignificant.

Also, as the time for retransmission is constant, the relative impact on a long message is significantly less critical than for a short message. Thus for most applications, if a retransmission is likely to cause a delay of, say, 1 second this will not be significant for a long message corresponding to a transmission time of, say, 100 seconds. However, if the message information size corresponds to only 1 second of transmission time, the delay becomes very significant.

For many communication services, it is more important to minimise the maximum delay rather than the average or typical delay. In an ARQ scheme, the delay associated with retransmission is very significant, and may for example correspond to, say, ten or even hundred data packets (e.g. RLC blocks). For messages with small message information size, the delay may thus be of the order of the transmission time if no retransmissions are required, but ten or even a hundred times longer if retransmission is required. Hence, by selecting a transmission scheme by taking into consideration the message information size, a transmission scheme can be selected which has better error performance and therefore requires more or longer data packets (e.g. RLC blocks) to be transmitted while virtually guaranteeing that retransmission will not be required. Consequently, the typical delay associated with no retransmissions may increase but the maximum delay is substantially reduced.

In the preferred embodiment, the plurality of transmission schemes, which can be selected, comprises transmission schemes employing different error correcting codes. Different error correcting schemes will provide different error performance and require different number of channel bits. One transmission may thus comprise a 1/3 rate Viterbi coding and another a 1/2 rate Viterbi coding. The first transmission scheme will require 50% more channel bits but will provide significantly improved error performance. Further, different error correcting coding and decoding can easily be implemented and thus provide a simple implementation of different transmission schemes meeting the requirements.

In the preferred embodiment, the plurality of transmission schemes additionally or alternatively comprises transmission schemes employing different modulation formats. Preferably, the different modulation formats are of different order. Different modulation formats of different orders have different error probabilities and different data capacity. Thus, one transmission scheme may employ QPSK and another may apply 8-PSK, which has reduced error performance but can communicate three rather than 2 bits per channel symbol.

In the preferred embodiment, the selection of the first transmission scheme is such that an error rate of the communication is below an error threshold for the determined radio characteristic, the error threshold being dependent on the message information size. Preferably, the error threshold decreases for decreasing message information size.

Hence, in a simple implementation, the radio characteristics are determined and if the message information size is below a given threshold the highest capacity transmission scheme with an error probability below a value α is chosen; and if the message information size is above this threshold, the highest capacity transmission scheme with an error probability below a value β is chosen, where a is lower than β. In more complex embodiments more complicated functions may of course be used for determining the error threshold as a function of the message information size.

In an ARQ scheme, an average delay will depend on the amount of time it takes to communicate the data packets (e.g. RLC blocks) if no retransmissions are required, the probability of retransmissions being required and the delay associated with these retransmissions. Thus, selecting a transmission scheme with increased error performance but reduced throughput rate will result in the delay of the initial transmissions of data packets being increased, but the average delay associated with retransmissions being reduced, since fewer retransmissions are required. Depending on the specific parameters for the communication system and the transmission schemes employed, there is thus a trade of between the error performance and throughput of the transmission schemes. According to one embodiment, the transmission scheme is selected as that resulting in an average overall delay being the lowest and specifically wherein the average delay associated with the following equation is minimised:

$$Delay = N + K + \sum_{n} p(NACK)^n \cdot (N + K)$$

wherein N is the message information size, K is an ARQ feedback delay and p(NACK) is a probability of a Negative ACKnowledgement for the determined radio characteristic.

Preferably in this embodiment, the first transmission scheme is specifically selected as that resulting in the average overall delay being the lowest, while keeping a total expected resource associated with transmission of the message below a resource threshold. The resource associated with transmission of a message is determined by the resource required to transmit the data packets (e.g. RLC blocks) the first time, the resource required for transmission of ACK/NACK messages, the probability of retransmissions and the resource required for the retransmissions. Hence, the choice of transmission scheme will affect the resource use, and the optimum trade-off for minimising the average delay may be different than the optimum trade-off for the resource consumption. Hence, in the described embodiment, the expected resource consumption is also calculated for the different transmission schemes, and a transmission scheme is selected which has a resource consumption less than a given resource threshold.

In another embodiment, the first transmission scheme is selected as that resulting in a total expected resource associated with transmission of the message being the lowest, and preferably while keeping an average overall delay below a delay threshold. Hence, in this embodiment both the average expected delay and resource consumption is determined for the different transmission schemes but in contrast to the previous embodiment, the transmission scheme selection is here performed to optimise the trade-off for minimum resource consumption.

In one embodiment, the method of transmission scheme selection further comprises the step of determining an available communication resource, and the selection of the first transmission scheme is additionally in response to the determined system capacity. In a specific embodiment, the available communication resource is an ARQ feedback resource. In this embodiment, the available resource is for transmitting the ACK/NACK messages is first determined. In a typical communication system, such as GPRS, these messages are communicated on shared control channels which have a limited resource. As the control channels are shared between a plurality of user equipment, each using an ARQ scheme, the available resource for ACK/NACK messages will vary. Further, the requirement for ACK/NACK messages varies depending on the transmission scheme selected as the retransmitted data packets (e.g. RLC blocks) themselves need to be acknowledged. Thus, the trade off between error rate and throughput will also affect the resource for ACK/NACK messages, and therefore this is preferably considered in the selection of the transmission scheme.

Further the impact on the determined system capacity, whether for communication of data or ACK/NACK messages, of the selected transmission scheme is closely related to the message information size. For small message information size, only few retransmissions are likely to occur even for a low error performance, as only limited amounts of data is transmitted. However, for large message information size, selecting a transmission scheme having low error performance may result in significant impact on the system resource, as a large number of retransmissions will occur since many data packets must be communicated. Hence, in this specific example, the selection of the transmission scheme may be such that the error performance of the transmission scheme is reduced for lower message information size.

The invention can be implemented in any suitable form including hardware, software, firmware or any combination of these. However, preferably, the invention is implemented as computer software running on one or more data processors. The elements and components of an embodiment of the invention may be located in the core network, the radio access network, a user equipment or any suitable physical or functional location. Indeed the functionality may be implemented in a single unit, in a plurality of units or as part of other functional units. As such, the invention may be implemented in a single unit or may be physically and functionally distributed in any suitable form. It will be clear, that the invention is equally applicable to downlink communication as to uplink communication. In an embodiment for downlink data communication, the functionality described in the user equipment 201 may be implemented in the base station, and the functionality described in the base station 223 may be implemented in the user equipment 201. In one embodiment, the transmission scheme selection for both uplink and/or downlink is made in the fixed network and communicated to the user equipment over the air interface.

The invention thus tends to provide a number of advantages by providing a method for optimising transmission scheme selection in response to message information size.

**Claims**

1. A method (300) of transmission scheme selection for a message including user data before being segmented prior to transmission in a communication system communicating data by use of an Automatic Repeat Request (ARQ) protocol and a plurality of transmission schemes having different error performances, the method comprising the steps of:

   determining (301) at least one radio propagation characteristics for a communication device;
   determining (303) a message information size, including a total length of the user data before being segmented prior to transmission of the message to be communicated from or to the communication device; and
   selecting (305) a transmission scheme from the plurality of transmission schemes in response to the determined characteristic and the message information size, **characterized in that** the selected transmission scheme is expected to have an error rate of the communication that is below an error threshold for the determined characteristic, the error threshold being dependent on the message information size.

2. A method of transmission scheme selection as claimed in claim 1, wherein the plurality of transmission schemes comprises transmissions schemes employing different error correcting codes.

3. A method of transmission scheme selection as claimed in claim 1 or 2, wherein the plurality of transmission schemes comprises transmission schemes employing different modulation formats.

4. A method of transmission scheme selection as claimed in claim 3 wherein the different modulation formats are of different order.

5. A method of transmission scheme selection as claimed in claim 1, wherein the error threshold decreases for decreasing message information size.

6. A method of transmission scheme selection as claimed in any of the claims 1 to 4 wherein the transmission scheme is selected as that estimated to have an average overall delay being the lowest.

7. A method of transmission scheme selection as claimed in claim 6 wherein the transmission scheme is selected as that estimated to have the average overall delay being the lowest, while keeping a expected resource for that particular transmission of the message below a resource threshold.

8. A method of transmissions scheme selection as claimed in any previous claim 1 to 5 wherein the transmission scheme is selected as that estimated to have a expected resource for that particular transmission of the message being the lowest as well as having an error rate of the communication that is below an error threshold for the determined characteristic.

9. A method of transmission scheme selection as claimed in claim 8 wherein the transmission scheme is selected as that estimated to have the expected resource for that particular transmission being the lowest, while keeping an average overall delay below a delay threshold.

10. A method of transmission scheme selection as claimed in any previous claim wherein the selection of the transmission scheme is additionally in response to a determined system capacity.

11. A method of transmission scheme selection as claimed in claim 10 wherein the available communication resource is a resource providing ARQ feedback.

12. An apparatus for transmission scheme selection for a message including user data before being segmented prior to transmission in a communication system communicating data by use of an Automatic Repeat reQuest (ARQ) protocol and a plurality of transmission schemes having different error performance, the apparatus comprising:

means (251) for determining at least one radio propagation characteristic for a communication device;
means (253) for determining a message information size, including the total length of the user data before being segmented prior to transmission of the message to be communicated from or to the communication device; and
means (247) for selecting a transmission scheme from the plurality of transmission schemes in response to the determined characteristic and the message information size; and **characterised by** the selected transmission scheme being expected to have an error rate of the communication that is below an error threshold for the determined characteristic, the error threshold being dependent on the message information size.

13. An apparatus for transmission scheme selection as claimed in claim 12, wherein the plurality of transmission schemes comprises transmission schemes employing different error correcting codes.

14. An apparatus for transmission scheme selection as claimed in claim 12 or 13, wherein the plurality of transmission schemes comprises transmission schemes employing different modulation formats.

15. An apparatus for transmission scheme selection as claimed in claim 14 wherein the different modulation formats are of different order.

16. An apparatus for transmission scheme selection as claimed in claim 12, wherein the error threshold decreases for decreasing message information size.

17. An apparatus for transmission scheme selection as claimed in any of the claims 12 to 15 wherein the means (247) for selecting is operable to select the transmission scheme as that estimated to have an average overall delay being the lowest.

18. An apparatus for transmission scheme selection as claimed in claim 17 wherein the means (247) for selecting is operable to select the transmission scheme as that estimated to have the average overall delay being the lowest, while keeping an expected resource for that particular transmission of the message below a resource threshold.

19. An apparatus for transmission scheme selection as claimed in any previous claim 12 to 16 wherein the means (247) for selecting is operable to select the transmission scheme as that estimated to have a expected resource for that particular transmission of the message being the lowest as well as having an error rate of the communication that is below an error threshold for the determined characteristic.

20. An apparatus for transmission scheme selection as claimed in claim 19 wherein the means (247) for selecting is operable to select the transmission scheme as that estimated to have the expected resource for that particular transmission being the lowest, while keeping an average overall delay below a delay threshold.

21. An apparatus for transmission scheme selection as claimed in any of the previous claims 12 to 20 wherein the means (247) for selecting is additionally operable to select the transmission scheme in response to a determined system capacity.

22. An apparatus for transmissions scheme selection as claimed in claim 21 wherein the available communication resource is a resource providing ARQ feedback.

**Patentansprüche**

1. Verfahren (300) zur Auswahl eines Übertragungsschemas für eine Nachricht, die Anwenderdaten umfasst, bevor sie vor einer Übertragung segmentiert werden, in einem Kommunikationssystem, das Daten unter Verwendung eines automatischen Wiederholungsanforderungsprotokolls (ARQ-Protokoll) und einer Mehrzahl von Übertragungsschemata, die über verschiedene Fehlerleistungen verfügen, kommuniziert, wobei das Verfahren die folgenden Schritte umfasst:

Bestimmen (301) mindestens einer Funkausbreitungscharakteristik für eine Kommunikationsvorrichtung; Bestimmen (303) einer Nachrichteninformationsgröße, die eine Gesamtlänge der Anwenderdaten, bevor sie vor einer Übertragung der von oder zu der Kommunikationsvorrichtung zu übertragenden Nachricht segmentiert werden, umfasst; und

Auswählen (305) eines Übertragungsschemas aus der Mehrzahl von Übertragungsschemata in Reaktion auf die bestimmte Charakteristik und die Nachrichteninformationsgröße, **dadurch gekennzeichnet, dass** das ausgewählte Übertragungsschema über eine voraussichtliche Fehlerrate der Kommunikation verfügt, die unter einem Fehlerschwellenwert für die bestimmte Charakteristik liegt, wobei der Fehlerschwellenwert von der Nachrichteninformationsgröße abhängt.

2. Verfahren zur Auswahl eines Übertragungsschemas gemäß Anspruch 1, wobei die Mehrzahl von Übertragungsschemata Übertragungsschemata umfasst, die verschiedene fehlerkorrigierende Codes einsetzen.

3. Verfahren zur Auswahl eines Übertragungsschemas gemäß Anspruch 1 oder 2, wobei die Mehrzahl von Übertragungsschemata Übertragungsschemata umfasst, die verschiedene Modulationsformate einsetzen.

4. Verfahren zur Auswahl eines Übertragungsschemas gemäß Anspruch 3, wobei die verschiedenen Modulationsformate unterschiedliche Grade haben.

5. Verfahren zur Auswahl eines Übertragungsschemas gemäß Anspruch 1, wobei der Fehlerschwellenwert mit abnehmender Nachrichteninformationsgröße abnimmt.

6. Verfahren zur Auswahl eines Übertragungsschemas gemäß einem der Ansprüche 1 bis 4, wobei das Übertragungsschema als das ausgewählt wird, das abgeschätzt wurde, über eine niedrigste mittlere Gesamtverzögerung zu verfügen.

7. Verfahren zur Auswahl eines Übertragungsschemas gemäß Anspruch 6, wobei das Übertragungsschema als das ausgewählt wird, das abgeschätzt wurde, über die niedrigste mittlere Gesamtverzögerung zu verfügen, während es eine erwartete Ressource für diese bestimmte Übertragung der Nachricht unter einen Ressourcenschwellenwert hält.

8. Verfahren zur Auswahl eines Übertragungsschemas gemäß einem der Ansprüche 1 bis 5, wobei das Übertragungsschema als das ausgewählt wird, das abgeschätzt wurde, über eine erwartete Ressource für diese bestimmte Übertragung der Nachricht zu verfügen, die die niedrigste ist, sowie über eine Fehlerrate der Kommunikation zu verfügen, die unter einem Fehlerschwellenwert für diese bestimmte Charakteristik liegt.

9. Verfahren zur Auswahl eines Übertragungsschemas gemäß Anspruch 8, wobei das Übertragungsschema als das ausgewählt wird, das abgeschätzt wurde, über die erwartete Ressource für die bestimmte Übertragung zu verfügen, die die niedrigste ist, während es eine mittlere Gesamtverzögerung unter einem Verzögerungsschwellenwert hält.

10. Verfahren zur Auswahl eines Übertragungsschemas gemäß einem der vorangehenden Ansprüche, wobei die Auswahl des Übertragungsschemas zusätzlich in Reaktion auf eine bestimmte Systemkapazität durchgeführt wird.

11. Verfahren zur Auswahl eines Übertragungsschemas gemäß Anspruch 10, wobei die zur Verfügung stehende Kommunikationsressource eine Ressource ist, die eine ARQ-Rückkopplung zur Verfügung stellt.

12. Vorrichtung zur Auswahl eines Übertragungsschemas für eine Nachricht, die Anwenderdaten umfasst, bevor sie vor einer Übertragung segmentiert werden, in einem Kommunikationssystem, das Daten unter Verwendung eines automatischen Wiederholungsanforderungsprotokolls (ARQ-Protokoll) und einer Mehrzahl von Übertragungsschemata, die über verschiedene Fehlerleistungen verfügen, kommuniziert, wobei die Vorrichtung umfasst:

Mittel (251) zum Bestimmen mindestens einer Funkausbreitungscharakteristik für eine Kommunikationsvorrichtung;
Mittel (253) zum Bestimmen einer Nachrichteninformationsgröße, die die Gesamtlänge der Anwenderdaten, bevor sie vor einer Übertragung der von oder zu der Kommunikationsvorrichtung zu übertragenden Nachricht segmentiert werden, umfasst; und
Mittel (247) zum Auswählen eines Übertragungsschemas aus der Mehrzahl von Übertragungsschemata in Reaktion auf die bestimmte Charakteristik und die Nachrichteninformationsgröße; und **dadurch gekennzeich-**

**net, dass** das ausgewählte Übertragungsschema über eine voraussichtliche Fehlerrate der Kommunikation verfügt, die unter einem Fehlerschwellenwert für die bestimmte Charakteristik liegt, wobei der Fehlerschwellenwert von der Nachrichteninformationsgröße abhängt.

13. Vorrichtung zur Auswahl eines Übertragungsschemas gemäß Anspruch 12, wobei die Mehrzahl von Übertragungsschemata Übertragungsschemata umfasst, die verschiedene fehlerkorrigierende Codes einsetzen.

14. Vorrichtung zur Auswahl eines Übertragungsschemas gemäß Anspruch 12 oder 13, wobei die Mehrzahl von Übertragungsschemata Übertragungsschemata umfasst, die verschiedene Modulationsformate einsetzen.

15. Vorrichtung zur Auswahl eines Übertragungsschemas gemäß Anspruch 14, wobei die verschiedenen Modulationsformate unterschiedliche Grade haben.

16. Vorrichtung zur Auswahl eines Übertragungsschemas gemäß Anspruch 12, wobei der Fehlerschwellenwert mit abnehmender Nachrichteninformationsgröße abnimmt.

17. Vorrichtung zur Auswahl eines Übertragungsschemas gemäß einem der Ansprüche 12 bis 15, wobei das Mittel (247) zum Auswählen betreibbar ist, um das Übertragungsschema auszuwählen, das abgeschätzt wurde, über eine niedrigste mittlere Gesamtverzögerung zu verfügen.

18. Vorrichtung zur Auswahl eines Übertragungsschemas gemäß Anspruch 17, wobei das Mittel (247) zum Auswählen betreibbar ist, um das Übertragungsschema auszuwählen, das abgeschätzt wurde, über die niedrigste mittlere Gesamtverzögerung zu verfügen, während es eine erwartete Ressource für diese bestimmte Übertragung der Nachricht unter einen Ressourcenschwellenwert hält.

19. Vorrichtung zur Auswahl eines Übertagungsschemas gemäß einem der vorangehenden Ansprüche 12 bis 16, wobei das Mittel (247) zum Auswählen betreibbar ist, um das Übertragungsschema auszuwählen, das abgeschätzt wurde, über eine erwartete Ressource für diese bestimmte Übertragung der Nachricht zu verfügen, die die niedrigste ist, sowie über eine Fehlerrate der Kommunikation zu verfügen, die unter einem Fehlerschwellenwert für die bestimmte Charakteristik liegt.

20. Vorrichtung zur Auswahl eines Übertragungsschemas gemäß Anspruch 19, wobei das Mittel (247) zum Auswählen betreibbar ist, um das Übertragungsschema auszuwählen, das abgeschätzt wurde, über die erwartete Ressource für die bestimmte Übertragung zu verfügen, die die niedrigste ist, während es eine mittlere Gesamtverzögerung unter einem Verzögerungsschwellenwert hält.

21. Vorrichtung zur Auswahl eines Übertragungsschemas gemäß einem der vorangehenden Ansprüche 12 bis 20, wobei das Mittel (247) zum Auswählen zusätzlich betreibbar ist, um das Übertragungsschema in Reaktion auf eine bestimmte Systemkapazität auszuwählen.

22. Vorrichtung zur Auswahl eines Übertragungsschemas gemäß Anspruch 21, wobei die zur Verfügung stehende Kommunikationsressource eine Ressource ist, die eine ARQ-Rückkopplung zur Verfügung stellt.

**Revendications**

1. Procédé (300) de sélection d'un mécanisme de transmission pour un message comprenant des données utilisateur, avant la segmentation de celui-ci précédant sa transmission dans un système de communication communiquant des données au moyen d'un protocole de Demande de Répétition Automatique (ARQ) et d'une pluralité de mécanismes de transmission ayant des performances différentes concernant le traitement des erreurs, le procédé comprenant les étapes consistant à :

   déterminer (301) au moins une caractéristique de propagation radio pour un dispositif de communication ;
   déterminer (303) une taille d'informations du message, incluant la longueur totale des données utilisateur avant la segmentation précédant la transmission du message qui doit être communiqué en provenance ou à destination du dispositif de communication ; et
   sélectionner (305) un mécanisme de transmission parmi la pluralité de mécanismes de transmission en réponse à la caractéristique déterminée et à la taille des informations du message, **caractérisé en ce qu'**il est attendu que le mécanisme de transmission sélectionné ait un taux d'erreur sur la communication inférieur à un seuil d'erreur pour la caractéristique déterminée, le seuil d'erreur étant dépendant de la taille des informations du message.

2. Procédé de sélection d'un mécanisme de transmission selon la revendication 1, dans lequel la pluralité de mécanismes de transmission comprend des mécanismes de transmission utilisant des codes de correction d'erreur différents.

3. Procédé de sélection d'un mécanisme de transmission selon la revendication 1 ou 2, dans lequel la pluralité de mécanismes de transmission comprend des mécanismes de transmission utilisant des formats de modulation différents.

4. Procédé de sélection d'un mécanisme de transmission selon la revendication 3, dans lequel les différents formats de modulation sont d'ordre différent.

5. Procédé de sélection d'un mécanisme de transmission selon la revendication 1, dans lequel le seuil d'erreur diminue avec la diminution de la taille des informations du message.

6. Procédé de sélection d'un mécanisme de transmission selon l'une quelconque des revendications 1 à 4, dans lequel le mécanisme de transmission sélectionné est celui qui est estimé comme ayant le plus petit temps de propagation global moyen.

7. Procédé de sélection d'un mécanisme de transmission selon la revendication 6, dans lequel le mécanisme de transmission sélectionné est celui qui est estimé comme ayant le plus petit temps de propagation global moyen, tout en maintenant une ressource prévue pour cette transmission particulière du message en dessous d'un seuil de ressource.

8. Procédé de sélection d'un mécanisme de transmission selon l'une quelconque des revendications 1 à 5, dans lequel le mécanisme de transmission sélectionné est celui qui est estimé comme ayant le niveau le plus bas concernant une ressource prévue pour cette transmission particulière du message, en ayant également un taux d'erreur sur la communication inférieur à un seuil d'erreur pour la caractéristique déterminée.

9. Procédé de sélection d'un mécanisme de transmission selon la revendication 8, dans lequel le mécanisme de transmission sélectionné est celui qui est estimé comme ayant le niveau le plus bas concernant la ressource prévue pour cette transmission particulière, tout en maintenant le temps de propagation global moyen inférieur à un seuil de temps de propagation.

10. Procédé de sélection d'un mécanisme de transmission selon l'une quelconque des revendications précédentes, dans lequel la sélection du mécanisme de transmission se fait, en outre, en réponse à une capacité système déterminée.

11. Procédé de sélection d'un mécanisme de transmission selon la revendication 10, dans lequel la ressource de communication disponible est une ressource fournissant un retour d'information ARQ.

12. Appareil pour la sélection d'un mécanisme de transmission pour un message comprenant des données utilisateur, avant la segmentation de celui-ci précédant sa transmission dans un système de communication communiquant des données au moyen d'un protocole de Demande de Répétition Automatique (ARQ) et d'une pluralité de mécanismes de transmission ayant des performances différentes concernant le traitement des erreurs, l'appareil comprenant :

des moyens (251) pour déterminer au moins une caractéristique de propagation radio pour un dispositif de communication ;
des moyens (253) pour déterminer une taille d'informations du message, incluant la longueur totale des données utilisateur avant la segmentation précédant la transmission du message qui doit être communiqué en provenance ou à destination du dispositif de communication ; et
des moyens (247) pour sélectionner un mécanisme de transmission parmi la pluralité de mécanismes de transmission en réponse à la caractéristique déterminée et à la taille des informations du message ; et **caractérisé en ce qu'**il est attendu que le mécanisme de transmission sélectionné ait un taux d'erreur sur la communication inférieur à un seuil d'erreur pour la caractéristique déterminée, le seuil d'erreur étant dépendant de la taille des informations du message.

13. Appareil pour la sélection d'un mécanisme de transmission selon la revendication 12, dans lequel la pluralité de mécanismes de transmission comprend des mécanismes de transmission utilisant des codes de correction d'erreur différents.

14. Appareil pour la sélection d'un mécanisme de transmission selon la revendication 12 ou 13, dans lequel la pluralité de mécanismes de transmission comprend des mécanismes de transmission utilisant des formats de modulation différents.

15. Appareil pour la sélection d'un mécanisme de transmission selon la revendication 14, dans lequel les différents formats de modulation sont d'ordre différent.

16. Appareil pour la sélection d'un mécanisme de transmission selon la revendication 12, dans lequel le seuil d'erreur diminue avec la diminution de la taille des informations du message.

17. Appareil pour la sélection d'un mécanisme de transmission selon l'une quelconque des revendications 12 à 15, dans lequel les moyens (247) de sélection opèrent de façon à sélectionner en tant que mécanisme de transmission celui qui est estimé comme ayant le plus petit temps de propagation global moyen.

18. Appareil pour la sélection d'un mécanisme de transmission selon la revendication 17, dans lequel les moyens (247) de sélection opèrent de façon à sélectionner en tant que mécanisme de transmission celui qui est estimé comme ayant le plus petit temps de propagation global moyen, tout en maintenant une ressource prévue pour cette transmission particulière du message en dessous d'un seuil de ressource.

19. Appareil pour la sélection d'un mécanisme de transmission selon l'une quelconque des revendications 12 à 16, dans lequel les moyens (247) de sélection opèrent de façon à sélectionner en tant que mécanisme de transmission celui qui est estimé comme ayant le niveau le plus bas concernant une ressource prévue pour cette transmission particulière du message, en ayant également un taux d'erreur sur la communication inférieur à un seuil d'erreur pour la caractéristique déterminée.

20. Appareil pour la sélection d'un mécanisme de transmission selon la revendication 19, dans lequel les moyens (247) de sélection opèrent de façon à sélectionner en tant que mécanisme de transmission celui qui est estimé comme ayant le niveau le plus bas concernant la ressource prévue pour cette transmission particulière, tout en maintenant le temps de propagation global moyen inférieur à un seuil de temps de propagation.

21. Appareil pour la sélection d'un mécanisme de transmission selon l'une quelconque des revendications 12 à 20, dans lequel les moyens (247) de sélection opèrent, en outre, de façon à sélectionner le mécanisme de transmission en réponse à une capacité système déterminée.

22. Appareil pour la sélection d'un mécanisme de transmission selon la revendication 21, dans lequel la ressource de communication disponible est une ressource fournissant un retour d'information ARQ.

- PRIOR ART -

FIG. 1

**FIG. 2**

EP 1 532 760 B1

301 — DETERMINE RADIO CHARACTERISTIC

303 — DETERMINE MESSAGE INFORMATION SIZE

305 — SELECT TRANSMISSION SCHEME

300

*FIG. 3*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020036992 A

**Non-patent literature cited in the description**

- The GSM System for Mobile Communications. **MICHEL MOULY ; MARIE BERNADETTE PAUTET.** Bay Foreign Language Books. 1992

- **JIAN CAI ; DAVID J. GOODMAN.** General Packet Radio Service in GSM. *IEEE Communication Magazine,* October 1997, 122-131
- WCDMA for UMTS. Wiley & Sons, 2001